# EUROPEAN PATENT SPECIFICATION

(11) **EP 4 116 097 B1**
(45) Date of publication and mention of the grant of the patent: **26.06.2024**
(21) Application number: 21821020.1
(22) Date of filing: 31.05.2021
(51) Int. Cl.: B32B 27/32, B65D 65/40, C08J 5/18, C08L 23/10

(54) **MULTILAYER FILM, PACKAGING MATERIAL AND PACKAGE**
MEHRSCHICHTFOLIE, VERPACKUNGSMATERIAL UND VERPACKUNG
FILM MULTICOUCHE, MATÉRIAU D'EMBALLAGE ET EMBALLAGE

(30) Priority: 12.06.2020 JP 2020102265; 12.06.2020 JP 2020102271
(43) Date of publication of application: 11.01.2023
(73) Proprietor: TOPPAN INC., Tokyo 110-0016 (JP)
(72) Inventor: HAMADA Daisuke, Tokyo 110-0016 (JP); TAKENOUCHI Motokuni, Tokyo 110-0016 (JP); OOKI Tomoko, Tokyo 110-0016 (JP); NISHIHARA Tsuguki, Tokyo 110-0016 (JP); HORIUCHI Masafumi, Tokyo 110-0016 (JP)
(74) Representative: TBK
(86) International application number: PCT/JP2021/020696
(87) International publication number: WO 2021/251195

(56) References cited:
- JP-A- S 623 950
- JP-A- S 623 950
- JP-A- H08 174 777
- JP-A- H09 262 948
- JP-A- 2001 088 254
- JP-A- 2009 143 118
- JP-A- 2015 050 075
- JP-A- 2015 232 945
- JP-A- 2016 091 939
- JP-A- 2017 132 186
- JP-B2- H0 764 045
- US-A1- 2010 143 627
- US-A1- 2010 179 504

## Description

### Technical Field

The present invention relates to a multilayer film, a packaging material, and a package. Specifically, the present invention relates to a polypropylene-based multilayer film which is excellent in heat resistance and transparency and can be suitably used as a sealant film for a packaging bag even in a harsh treatment such as boiling water treatment or retort treatment, and a packaging material and a package obtained using the polypropylene-based multilayer film.

### Background Art

Since a polypropylene-based film is excellent in rigidity and heat resistance, and is inexpensive, the polypropylene-based film may be used as a sealant film in various packaging materials such as food packaging.

Patent Literature 1 proposes a polypropylene-based composite film constituted by three layers including an intermediate layer formed of a propylene/ethylene block copolymer, and both surface layers formed of a propylene-based random copolymer.

Patent Literature 2 proposes a multilayer film constituted by both surface layers containing an ethylene-α-olefin copolymer and a propylene-based polymer, and an intermediate layer containing a propylene polymer and an ethylene-propylene copolymer.

### Citation List

### Patent Literature

[Patent Literature 1] Japanese Unexamined Patent Publication No. 2017-132186
[Patent Literature 2] Japanese Unexamined Patent Publication No. 2017-105174

US2010143627 relates to a multilayer film.

### Summary of invention

### Technical Problem

A polypropylene-based multilayer film is required to have, for example, heat resistance that can withstand retort treatment, in which a pressure treatment is performed at a high temperature of 120 to 135°C for disinfection and sterilization, and transparency for maintaining visibility of contents. However, it is the current situation that achieving excellent heat resistance and transparency at the same time is difficult with a conventional polypropylene-based multilayer film.

The present invention has been made in view of the above-described circumstances, and an objective of the present invention is to provide a polypropylene-based multilayer film capable of achieving excellent heat resistance and transparency at the same time. Another objective of the present invention is to provide a packaging material and a package that can be obtained by using the multilayer film.

### Solution to Problem

As a result of intensive research to solve the above-described problems, the inventors have found that it is important to incorporate a mixture of predetermined amounts of different propylene-based polymers in an outer layer in a polypropylene-based multilayer film, and thus completed of the present invention.

A multilayer film according to one aspect of the present invention includes a first outer layer containing 70 to 30% by mass of a propylene homopolymer (A) and 30 to 70% by mass of a propylene/ethylene random copolymer (B) having an ethylene content of 5% by mass or less, an inner layer containing a propylene/ethylene block copolymer (C) and an ethylene/propylene copolymer elastomer (D), and a second outer layer containing 70 to 30% by mass of the propylene homopolymer (A) and 30 to 70% by mass of the propylene/ethylene random copolymer (B) having an ethylene content of 5% by mass or less, in that order.

In the above-described multilayer film, the outer layer contains the propylene homopolymer (A) and the propylene/ethylene random copolymer (B) having a predetermined ethylene content in a specific amount ratio. Thereby, it is possible to suppress unevenness on a surface, which is a factor that deteriorates transparency of the film, while maintaining heat resistance. Such an effect cannot be obtained when a propylene-based random copolymer is used in the outer layer (for example, Patent Literature 1) or when an ethylene-α-olefin copolymer and a propylene-based polymer are used in the outer layer (for example, Patent Literature 2), and is a particularly suitable for applications with a retort treatment.

In the one aspect, a ratio Mw (EPR)/Mw (PP) of a weight-average molecular weight Mw (EPR) of an ethylene-propylene copolymer to a weight-average molecular weight Mw (PP) of a propylene polymer in the propylene/ethylene block copolymer (C) may be 1.5 or less. In this case, the outer layer contains the propylene homopolymer (A) and the propylene/ethylene random copolymer (B) in a specific amount ratio, and a ratio of weight-average molecular weights of the propylene polymer and the ethylene-propylene copolymer in the propylene/ethylene block copolymer (C) contained in the inner layer is a specific value or less. Thereby, it is possible to further reduce a difference in refractive index in the film, which is a factor that deteriorates transparency of the film, while maintaining heat resistance. Such an effect cannot be obtained with conventional multilayer films (for example, Patent Literature 1 and Patent Literature 2), and is particularly suitable for applications with a retort treatment.

In the one aspect, the inner layer may contain 90 to 50% by mass of the propylene/ethylene block copolymer (C) and 10 to 50% by mass of the ethylene/propylene copolymer elastomer (D). Thereby, flexibility of the film is maintained, edge breakage of a heat seal portion can be suppressed after retort treatment, and excellent heat sealing is easily obtained.

In the one aspect, a total thickness of the first outer layer and the second outer layer may be 16 to 42% based on a thickness of the multilayer film. Thereby, both transparency and heat sealing are easily achieved.

In the one aspect, a thickness of the inner layer may be 20 µm or more. Thereby, flexibility of the film is easily maintained.

In the one aspect, a thickness in a lamination direction of the ethylene-propylene copolymer present in the inner layer as a dispersing element may be 1.5 µm or less. Thereby, transparency of the film is easily maintained.

A packaging material according to another aspect of the present invention includes the multilayer film described above, and a base material.

A package according to still another aspect of the present invention is made from the packaging material described above.

### Advantageous Effects of Invention

According to the present invention, it is possible to provide a polypropylene-based multilayer film capable of achieving excellent heat resistance and transparency at the same time. Also, according to the present invention, it is possible to provide a packaging material and a package that can be obtained by using the multilayer film.

### Brief Description of Drawings

Fig. 1 is a cross-sectional view of a multilayer film according to one embodiment of the present invention.
Fig. 2 is a diagram showing a total melting heat amount of a propylene/ethylene random copolymer (B) used in example 1 and a result in which a melting heat amount is divided at 135°C.
Fig. 3 is a diagram showing a total melting heat amount of a propylene/ethylene random copolymer (E) used in comparative example 2 and a result in which a melting heat amount is divided at 135°C.
Fig. 4 is a cross-sectional image of an inner layer in example 1.
Fig. 5 is a cross-sectional image of an inner layer in example 10.

### Description of Embodiments

### <Multilayer film>

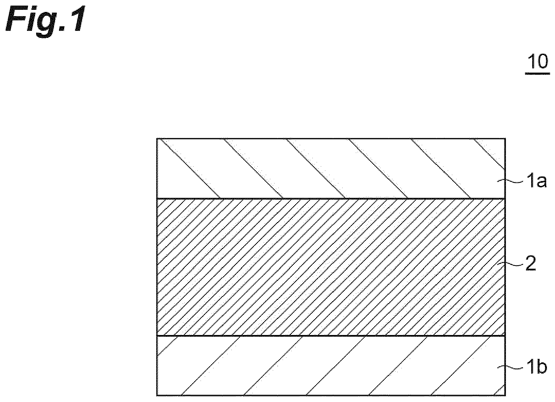

Fig. 1 is a cross-sectional view of a multilayer film according to one embodiment of the present invention. A multilayer film 10 includes a first outer layer 1a, an inner layer 2, and a second outer layer 1b in that order. The multilayer film can be used as a polypropylene-based unstretched sealant film.

### [First outer layer and second outer layer]

The first outer layer and the second outer layer contain a propylene homopolymer (A) and a propylene/ethylene random copolymer (B). The first outer layer and the second outer layer may be collectively referred to as an outer layer simply. The first outer layer and the second outer layer may have the same composition or may have different compositions.

### (Propylene homopolymer (A))

The propylene homopolymer (A) can be obtained by a method of homopolymerizing propylene using, for example, a Ziegler-Natta type catalyst or a metallocene catalyst. When the outer layer contains the propylene homopolymer (A), excellent heat resistance can be imparted to the outer layer.

As the propylene homopolymer (A), one having a melting start temperature of 150°C or higher and a melting peak temperature of 155°C or higher when a differential scanning calorimetry (JIS K 7121) is performed can be used. One having both the melting start temperature and the melting point peak temperature within this range has excellent heat resistance, and fusion does not easily occur on an inner surface of a package after, for example, retort treatment at a high temperature is performed.

As the propylene homopolymer (A), one having a melt flow rate (MFR: ISO 1133) (temperature 230°C, load 2.16 kg) in a range of 2.0 to 7.0 g/10 minutes can be used. When the melt flow rate is a lower limit value or higher, a load on an extruder during forming processing is reduced, a processing speed is unlikely to decrease, and excellent productivity is easily maintained. Also, when the melt flow rate is an upper limit value or lower, the outer layer tends to have excellent impact resistance.

### (Propylene/ethylene random copolymer (B))

The propylene/ethylene random copolymer (B) can be obtained by copolymerizing ethylene as a comonomer with a main monomer formed of propylene using, for example, a Ziegler-Natta type catalyst or a metallocene catalyst. When the outer layer contains the propylene/ethylene random copolymer (B), a multilayer film having excellent transparency can be obtained.

As the propylene/ethylene random copolymer (B), one having a melting start temperature of 140°C or higher and a melting peak temperature of 145°C or higher when the differential scanning calorimetry (JIS K 7121) is performed can be used. One having both the melting start temperature and the melting point peak temperature within this range has excellent heat resistance, and fusion does not easily occur on an inner surface of the package after, for example, retort treatment at a high temperature is performed.

As the propylene/ethylene random copolymer (B), one in which a ratio ΔHₕ/ΔHₗ between a melting heat amount ΔHₕ at a higher temperature than a measurement temperature 135°C and a melting heat amount ΔHₗ at a lower temperature than that when the differential scanning calorimetry (JIS K 7121) is performed is in a range of 1.5 to 2.5 can be used. When the above-described ratio is an upper limit value or lower, flexibility of a film is maintained, edge breakage of a heat seal portion can be suppressed after retort treatment, and a heat-seal strength is unlikely to decrease. A lower limit of the above-described ratio can be set to 1.5 from a viewpoint that fusion does not easily occur on an inner surface of the package after the retort treatment.

An ethylene content of the propylene/ethylene random copolymer (B) is 5% by mass or less. When the ethylene content is an upper limit value or lower, heat resistance is not excessively deteriorated while transparency is maintained, and fusion on an inner surface of the package can be suppressed after retort treatment. From this point of view, the ethylene content may be 4.5% by mass or less, and may be 4% by mass or less. A lower limit of the ethylene content is not particularly limited, but it can be set to 2% by mass from viewpoints that flexibility of the film is maintained, edge breakage can be suppressed at the heat seal portion after the retort treatment, and a heat-seal strength is unlikely to decrease.

The ethylene content of the propylene/ethylene random copolymer (B) can be measured according to an ethylene content quantification method (IR method) described on pages 412 to 413 of the Polymer Analysis Handbook (May 10, 2013, 3rd printing) edited by the Polymer Analysis Council of the Japan Society for Analytical Chemistry.

The outer layer contains 70 to 30% by mass of the propylene homopolymer (A) and 30 to 70% by mass of the propylene/ethylene random copolymer (B) having an ethylene content of 5% by mass or less. When a contained amount of the propylene homopolymer (A) is 30% by mass or more, excellent heat resistance can be maintained. From this point of view, the contained amount may be 35% by mass or more, and may be 40% by mass or more. When the contained amount of the propylene homopolymer (A) is 70% by mass or less, that is, a contained amount of the propylene/ethylene random copolymer (B) having the ethylene content of 5% by mass or less is at least 30% by mass or more, excellent transparency and heat sealing can be exhibited. From this viewpoint, the contained amount of the propylene homopolymer (A) may be 65% by mass or less, and may be 60% by mass or less. From the viewpoint described above, the contained amount of the propylene/ethylene random copolymer (B) having the ethylene content of 5% by mass or less may be 35 to 65% by mass, and may be 40 to 60% by mass.

### [Inner layer]

The inner layer contains a propylene/ethylene block copolymer (C) and an ethylene/propylene copolymer elastomer (D).

### (Propylene/ethylene block copolymer (C))

The propylene/ethylene block copolymer (C) is a copolymer that can be obtained by producing a propylene polymer (C1) in a first step and then producing an ethylene-propylene copolymer (C2) by vapor phase polymerization in a second step. The propylene/ethylene block copolymer (C) is not a block copolymer in which a propylene polymer terminal and an ethylene-propylene copolymer terminal are bonded, but is a kind of blend-based copolymer. When the inner layer contains the propylene/ethylene block copolymer (C), flexibility of the film is maintained, edge breakage of the heat seal portion can be suppressed after retort treatment, and excellent heat sealing is easily obtained.

The propylene/ethylene block copolymer (C) contains a propylene polymer component (C1) and an ethylene-propylene copolymer component (C2) as constituent components as described above. A ratio Mw (EPR)/Mw (PP) of a weight-average molecular weight Mw (EPR) of an ethylene-propylene copolymer to a weight-average molecular weight Mw (PP) of a propylene polymer in the propylene/ethylene block copolymer (C) may be 1.5 or less. Thereby, the inner layer can have more suitable transparency. From this point of view, the ratio may be 1.3 or less, and may be 1.2 or less. A lower limit of Mw (EPR)/Mw (PP) is not particularly limited, but can be set to 0.9 from a viewpoint of impact resistance.

The weight-average molecular weight ratio can be measured as follows. First, 200 ml of n-decane is added to 5 g of the propylene/ethylene block copolymer (C), and this is completely dissolved at 145°C. Thereafter, it is allowed to be cooled to room temperature, and then precipitates are filtered and separated. One obtained from the filtration is used as the propylene polymer component (propylene resin component), a solvent of the residual solution is completely removed in a dryer, and thereby an ethylene-propylene copolymer component is obtained. Each of the obtained components is added with 20 ml of a mobile phase for GPC measurement, dissolved at 145°C, hot-filtered through a sintered filter with a pore size of 1.0 µm, and thereby the filtrate is prepared as a measurement solution. Using a HLC-8321GPC/HT type high-temperature gel permeation chromatography manufactured by Tosoh as a measuring device, a molecular weight is measured using a simple PS conversion method under the conditions of a column size inner diameter of 7.5 mm, a length of 300 mm, a temperature of 140°C, o-dichlorobenzene (stabilizer; containing 0.025 wt% BHT) as a mobile phase, and a flow rate 1.0 ml. For the obtained results, a ratio of the weight-average molecular weight Mw (PP) of the propylene polymer component and the weight-average molecular weight Mw (EPR) of the ethylene-propylene copolymer component is defined as a weight-average molecular weight ratio Mw (EPR)/Mw (PP).

A thickness in a lamination direction of the above-described ethylene-propylene copolymer present in the inner layer as a dispersing element may be 1.5 µm or less. The ethylene-propylene copolymer is a so-called elastomer component, and when the thickness thereof in the lamination direction is within this range, an increase in internal haze value is easily suppressed. Thereby, clouding of the entire film is suppressed, and this makes it easier to visually recognize contents. From this point of view, the thickness may be 1.25 µm or less, and may be 1.0 µm or less.

As the propylene/ethylene block copolymer (C), one having a melt flow rate (MFR: ISO 1133) (temperature 230°C, load 2.16 kg) in a range of 0.5 to 2.5 g/10 minutes can be used. When the melt flow rate is a lower limit value or higher, a load on an extruder during forming processing is reduced, a processing speed is unlikely to decrease, and excellent productivity is easily maintained. When the melt flow rate is an upper limit value or lower, the inner layer tends to have excellent flexibility, edge breakage of the heat seal portion can be suppressed, and excellent heat sealing is easily obtained.

The propylene/ethylene block copolymer (C) may contain 90 to 60% by mass of the propylene polymer (C1) and 10 to 40% by mass of the ethylene-propylene copolymer (C2). When each of the components is in this range, excellent heat sealing is easily obtained. From this point of view, the propylene/ethylene block copolymer (C) may contain 87.5 to 65% by mass of the propylene polymer (C1) and 12.5 to 35% by mass of the ethylene-propylene copolymer (C2), and may contain 85 to 70% by mass of the propylene polymer (C1) and 15 to 30% by mass of the ethylene-propylene copolymer (C2).

An ethylene content of the ethylene-propylene copolymer (C2) contained in the propylene/ethylene block copolymer (C) is not particularly limited, but can be in a range of 20 to 40% by mass. When the ethylene content is an upper limit value or lower, tackiness of a product material can be suppressed, contamination due to tackiness of the product material does not easily occur at the time of manufacture, and excellent productivity is easily maintained. When the ethylene content is a lower limit value or higher, flexibility of the film is maintained, edge breakage of the heat seal portion can be suppressed after retort treatment, and excellent heat sealing is easily obtained.

### (Ethylene/propylene copolymer elastomer (D))

The ethylene/propylene copolymer elastomer (D) can be obtained by, for example, a slurry polymerization method performed in a presence of an inert hydrocarbon such as hexane, heptane, kerosene, or a liquefied α-olefin solvent such as propylene, a vapor phase polymerization method in an absence of a solvent, or the like. Specifically, the ethylene/propylene copolymer elastomer (D) can be obtained by using a known multistage polymerization method. That is, the ethylene/propylene copolymer elastomer (D) is a polymerized high rubber-containing polypropylene-based resin that can be obtained by polymerizing propylene and/or propylene-α-olefin polymer in a first stage reactor and then copolymerizing propylene and α-olefin in a second stage reaction. When the inner layer contains the ethylene/propylene copolymer elastomer (D), flexibility is easily imparted to the film, edge breakage of the heat seal portion can be suppressed, and excellent heat sealing is easily obtained.

As the ethylene/propylene copolymer elastomer (D), one having a melt flow rate (MFR: ISO 1133) (temperature 230°C, load 2.16 kg) in a range of 0.5 to 3.5 g/10 minutes can be used. When the melt flow rate is a lower limit value or higher, a load on an extruder during forming processing is reduced, a processing speed is unlikely to decrease, and excellent productivity is easily maintained. When the melt flow rate is an upper limit value or lower, compatibility between the propylene/ethylene block copolymer (C) and the ethylene/propylene copolymer elastomer (D) is satisfactory, and transparency and impact resistance are not easily deteriorated.

As the ethylene/propylene copolymer elastomer (D), one having a ratio of a propylene content to an ethylene content (propylene content/ethylene content) in a range of 1.5 to 4 can be used. When the above-described ratio is a lower limit or higher, flexibility of the film is maintained, edge breakage of the heat seal portion can be suppressed after retort treatment, and excellent heat sealing is easily obtained. When the above-described ratio is an upper limit value or lower, the compatibility between the propylene/ethylene block copolymer (C) and the ethylene/propylene copolymer elastomer (D) is satisfactory, and transparency is not easily deteriorated.

The inner layer may contain 90 to 50% by mass of the propylene/ethylene block copolymer (C) and 10 to 50% by mass of the ethylene/propylene copolymer elastomer (D). When a contained amount of the propylene/ethylene block copolymer (C) is 50% by mass or more, excellent heat sealing is easily maintained. From this point of view, the contained amount may be 60% by mass or more, and may be 70% by mass or more. When the contained amount of the propylene/ethylene block copolymer (C) is 90% by mass or less, that is, a contained amount of the ethylene/propylene copolymer elastomer (D) is at least 10% by mass or more, even better heat sealing can be exhibited. From this point of view, the contained amount of the propylene/ethylene block copolymer (C) may be 87.5% by mass or less, and may be 85% by mass or less. From the viewpoint described above, the contained amount of the ethylene/propylene copolymer elastomer (D) may be 12.5 to 40% by mass and may be 15 to 30% by mass.

When only the resin used for the inner layer is formed into a film shape having a thickness of 60 µm using an extruder under a condition of 250°C, an internal haze value measured as follows may be 5% or less or may be 4% or less.

### [Measurement of internal haze]

After the manufactured film is cut into 70 mm×70 mm and silicone oil is applied to the light receiving areas of both surfaces of the film, the silicone oil is smoothed to a uniform thickness with a smooth film, and internal haze is measured in accordance with JIS K 7136 using a haze meter (model number HM-150) manufactured by Murakami Color Research Laboratory.

A thickness of the multilayer film is not particularly limited as long as it is in a range in which it can be used as a film for a packaging material, but if the film is too thick, there is a disadvantage in cost. Therefore, the thickness of the multilayer film can be 100 µm or less, and may be 50 to 70 µm.

A thickness of the outer layer (that is, a total thickness of the first outer layer and the second outer layer) may be 16 to 42% based on the thickness of the multilayer film. Excellent transparency is easily obtained when a proportion of the thickness of the outer layer is a lower limit value or higher, deterioration in heat sealing of the film can be suppressed when the proportion is an upper limit value or lower, and thereby easily having a practical use. From this point of view, the proportion of the thickness of the outer layer may be 20 to 35%.

A thickness of the inner layer may be 20 µm or more. Thereby, flexibility of the film is maintained, the film does not easily break after retort treatment, and the heat-seal strength is unlikely to decrease. From this point of view, the thickness of the inner layer may be 25 µm or more, and may be 30 µm or more. An upper limit value of the thickness of the inner layer is not particularly limited, but due to a disadvantage in cost, it can be set to 50 µm.

### <Characteristics of multilayer film>

A surface roughness of the multilayer film, that is, an arithmetic average roughness Ra (JIS B 0601-2001) of the outer layer constituting the multilayer film may be 0.05 to 0.15 µm. When Ra is a lower limit value or higher, sliding properties between the multilayer films tend to be satisfactory, and excellent processability is easily maintained. When Ra is an upper limit value or lower, diffused reflection due to unevenness on the film surface is less likely to occur, and excellent transparency can be easily obtained.

A haze value of the multilayer film having a thickness of 60 µm measured in accordance with JIS K 7136 may be 18% or lower, and may be 15% or lower. The haze value of 18% or lower means that visibility of contents is easily maintained.

A fusion strength of the multilayer film in a fusion test conducted in accordance with the following may be 2.0 N/15 mm or less. The fusion strength of 2.0 N/15 mm or less means that the films are difficult to fuse together when retort treatment is performed at a high temperature of 135°C.

### [Fusion test]

The multilayer films are heat-sealed using a heat sealer manufactured by Tester Sangyo Co., Ltd. under conditions of a sealing pressure of 0.03 MPa, a sealing time of 30 seconds, a sealing width of 10 mm, and a sealing temperature of 135°C. Thereafter, the heat-sealed multilayer film is cut into 15 mm width×80 mm, and T-shaped peeling is performed at a tensile speed of 300 mm/min to measure a fusion strength of the heat seal portion using a tensile tester manufactured by Shimadzu Corporation.

### <Manufacturing method of multilayer film>

A method for manufacturing a multilayer film is not particularly limited, and a known method can be utilized. For example, as a method of thermoforming processing, a melt-kneading method using a general pug mill such as a single-screw extruder, a twin-screw extruder, or a multi-screw extruder, a method in which a solvent is removed by heating after dissolving or dispersing and mixing each component, and the like can be exemplified. When workability is taken into consideration, a single-screw screw extruder or a twin-screw screw extruder can be used. When a single-screw extruder is used, a full flight screw, a screw having a mixing element, a barrier flight screw, a fluted screw, and the like can be exemplified as the screw, and these can be used without particular limitation. As a biaxial kneading device, a twin-screw extruder rotating in the same direction, a twin-screw extruder rotating in different directions, can be used, and as a shape of the screw, a full-flight screw, a kneading disc type, can be used without any particular limitation.

In the above-described methods, it is possible to use a method of forming a film with a T-die through a feed block or a multi-manifold after the multilayer film is melted by a single-screw extruder, a twin-screw extruder.

The obtained multilayer film may be subjected to a surface modification treatment to improve suitability for a post-process as appropriate, as necessary. For example, in order to improve printability when using a single film and improve laminate suitability when using a laminate film, a surface modification treatment may be performed on a surface to be printed or a surface to be in contact with a base material. Examples of the surface modification treatment may include a treatment that generates a functional group by oxidizing a film surface, such as a corona discharge treatment, a plasma treatment, a flame treatment, or the like, and a modification treatment using a wet process that forms an easy-adhesive layer by coating.

### <Packaging material>

The multilayer film may be used as a single film or may be used by being laminated with a base material, and a method of use as the packaging material is not particularly limited.

When the multilayer film is used by being laminated with a base material, the packaging material can include the above-described multilayer film and the base material. Specifically, such a packaging material can be obtained by laminating at least one layer of a base material such as a biaxially stretched polyamide film (ONy), biaxially stretched polyester film (PET), printing paper, a metal foil (AL foil), a transparent vapor-deposited film, on the above-described multilayer film to form a laminate. As a method for manufacturing the laminate, a normal dry lamination method in which films constituting the laminate are laminated together using an adhesive can be suitably employed, but a method of directly extrusion-laminating the multilayer film on the base material can also be employed as necessary.

The laminated structure of the laminate can be appropriately adjusted according to required characteristics of the package such as, for example, barrier properties that satisfies a quality retention period of a food to be packaged, a size and impact resistance that can handle a weight of contents, visibility of the contents.

### <Package>

The package may be made from the above-described packaging material, and there is no particular restriction on a form of the bag making. For example, the above-described packaging material (laminate) can be used for a flat bag, a three-sided bag, an edge-joined bag, a gusset bag, a standing pouch, a pouch with a spout, a pouch with a beak, and the like which use a multilayer film as a sealing material.

### [Examples]

Hereinafter, the present invention will be described in detail with reference to examples, but the present invention is not limited only to the following examples.

### <Manufacture of laminated film>

### (Example 1)

The following propylene homopolymer (A), propylene/ethylene random copolymer (B), propylene/ethylene block copolymer (C), and ethylene/propylene copolymer elastomer (D) were prepared.

### (Propylene homopolymer (A))

A propylene homopolymer having a melting start temperature of 153°C, a melting peak temperature of 159°C, and a melt flow rate (MFR: ISO 1133) (temperature 230°C, load 2.16 kg) of 3.0 g/10 min when a differential scanning calorimetry (JIS K 7121) was performed.

### (Propylene/ethylene random copolymer (B))

A propylene/ethylene random copolymer having a melting start temperature of 142°C, a melting peak temperature of 147°C, ΔHₕ/ΔHₗ of 1.84, and an ethylene content of 3.4% by mass when a differential scanning calorimetry (JIS K 7121) was performed.

Measurement of the ethylene content was performed according to an ethylene content quantification method (IR method) described on pages 412 to 413 of the Polymer Analysis Handbook (May 10, 2013, 3rd printing) edited by the Polymer Analysis Council of the Japan Society for Analytical Chemistry.

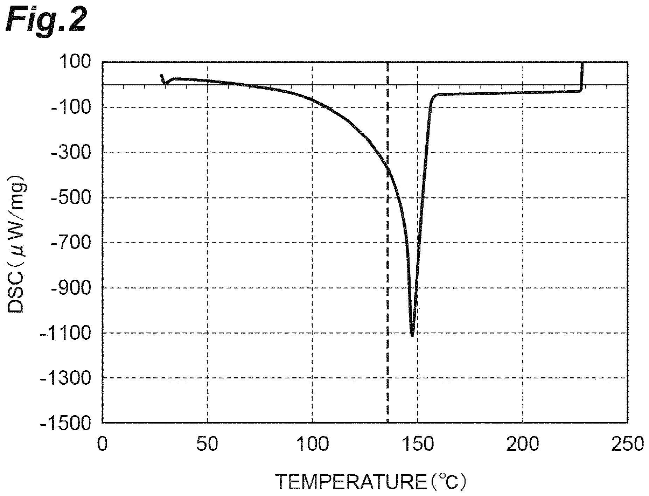

ΔHₕ/ΔHₗ is a ratio between the melting heat amount ΔHₕ at a higher temperature than a measurement temperature 135°C and the melting heat amount ΔHₗ at a lower temperature than that when the differential scanning calorimetry (JIS K 7121) is performed. Fig. 2 is a diagram showing a total melting heat amount of the propylene/ethylene random copolymer (B) and a result in which a melting heat amount is divided at 135°C.

### (Propylene/ethylene block copolymer (C))

A propylene/ethylene block copolymer having a melt flow rate (MFR: ISO 1133) (temperature 230°C, load 2.16 kg) of 2.0 g/10 min, containing 77.1% by mass of the propylene polymer and 22.9% by mass of the ethylene-propylene copolymer, and in which an ethylene content contained in the ethylene-propylene copolymer is 28.7% by mass, and the ratio Mw (EPR)/Mw (PP) of the weight-average molecular weight Mw (EPR) of an ethylene-propylene copolymer to the weight-average molecular weight Mw (PP) of a propylene polymer is 1.25.

The weight-average molecular weight ratio was measured as follows. 200 ml of n-decane was added to 5 g of the propylene/ethylene block copolymer (C), and this was completely dissolved at 145°C. Thereafter, it was allowed to be cooled to room temperature, and then precipitates were filtered and separated. One obtained from the filtration was used as the propylene polymer component, a solvent of the residual solution was completely removed in a dryer, and thereby an ethylene-propylene copolymer component was obtained. Each of the obtained components was added with 20 ml of a mobile phase for GPC measurement, dissolved at 145°C, hot-filtered through a sintered filter with a pore size of 1.0 µm, and thereby the filtrate was prepared as a measurement solution. Using a HLC-8321GPC/HT type high-temperature gel permeation chromatography manufactured by Tosoh as a measuring device, a molecular weight was measured using a simple PS conversion method under the conditions of a column size inner diameter of 7.5 mm, a length of 300 mm, a temperature of 140°C, o-dichlorobenzene (stabilizer; containing 0.025 wt% BHT) as a mobile phase, and a flow rate 1.0 ml. For the obtained results, a ratio of the weight-average molecular weight Mw (PP) of the propylene polymer component and the weight-average molecular weight Mw (EPR) of the ethylene-propylene copolymer component was set as the weight-average molecular weight ratio Mw (EPR)/Mw (PP).

### (Ethylene/propylene copolymer elastomer (D))

An ethylene/propylene copolymer elastomer in which a melt flow rate (MFR: ISO 1133) (temperature 230°C, load 2.16 kg) is 0.6 g/10 min, and a ratio of propylene content/ethylene content is 2.7.

For forming the outer layer, a resin mixture in which 70% by mass of the propylene homopolymer (A) and 30% by mass of the propylene/ethylene random copolymer (B) were mixed in a pellet state was used, and for forming the inner layer, a resin mixture in which 83% by mass of the propylene/ethylene block copolymer (C) and 17% by mass of the ethylene/propylene copolymer elastomer (D) were mixed in a pellet state was used. Each raw material was supplied to an extruder whose temperature was regulated to 250°C, kneaded in a molten state, a T-die extruder having a feed block was used to laminate so that the first outer layer and the second outer layer each had a thickness of 10 µm and the inner layer had a thickness of 40 µm, and thereby a film of example 1 was manufactured.

### (Example 2)

A film of example 2 was manufactured in the same manner as in example 1 except that a mixing ratio of the propylene homopolymer (A) and the propylene/ethylene random copolymer (B) was changed as shown in Table 1.

### (Example 3)

A film of example 3 was manufactured in the same manner as in example 1 except that a mixing ratio of the propylene homopolymer (A) and the propylene/ethylene random copolymer (B) was changed as shown in Table 1.

### (Example 4)

A film of example 4 was manufactured in the same manner as in example 2 except that thicknesses of the outer layer and the inner layer were changed as shown in Table 1.

### (Example 5)

A film of example 5 was manufactured in the same manner as in example 2 except that a mixing ratio of the propylene/ethylene block copolymer (C) and the ethylene/propylene copolymer elastomer (D) was changed as shown in Table 1.

### (Example 6)

A film of example 6 was manufactured in the same manner as in example 2 except that a mixing ratio of the propylene/ethylene block copolymer (C) and the ethylene/propylene copolymer elastomer (D) was changed as shown in Table 1.

### (Example 7)

A film of example 7 was manufactured in the same manner as in example 2 except that a propylene/ethylene block copolymer (C') as below was used instead of the propylene/ethylene block copolymer (C), and a mixing ratio of the propylene/ethylene block copolymer (C') and the ethylene/propylene copolymer elastomer (D) was changed as shown in Table 1.

### (Propylene/ethylene block copolymer (C'))

A propylene/ethylene block copolymer having a melt flow rate (MFR: ISO 1133) (temperature 230°C, load 2.16 kg) of 1.8 g/10 min, containing 81.5% by mass of the propylene polymer and 18.5% by mass of the ethylene-propylene copolymer, and in which an ethylene content contained in the ethylene-propylene copolymer is 36.2% by mass, and the ratio Mw (EPR)/Mw (PP) of the weight-average molecular weight Mw (EPR) of an ethylene-propylene copolymer to the weight-average molecular weight Mw (PP) of a propylene polymer is 1.16.

### (Example 8)

A film of example 8 was manufactured in the same manner as in example 2 except that a mixing ratio of the propylene/ethylene block copolymer (C') and the ethylene/propylene copolymer elastomer (D) was changed as shown in Table 1.

### (Example 9)

A film of example 9 was manufactured in the same manner as in example 2 except that a mixing ratio of the propylene/ethylene block copolymer (C') and the ethylene/propylene copolymer elastomer (D) was changed as shown in Table 1.

### (Comparative example 1)

A film of comparative example 1 was manufactured in the same manner as in example 1 except that the outer layer was formed using only the propylene/ethylene random copolymer (B).

### (Comparative example 2)

A film of comparative example 2 was manufactured in the same manner as in example 1 except that a propylene/ethylene random copolymer (E) as below was used instead of the propylene/ethylene random copolymer (B), and a mixing ratio of the propylene homopolymer (A) and the propylene/ethylene random copolymer (E) was changed as shown in Table 2.

### (Propylene/ethylene random copolymer (E))

A propylene/ethylene random copolymer having a melting start temperature of 122°C, a melting peak temperature of 133°C, ΔHₕ/ΔHₗ of 0.275, and an ethylene content of 5.8% by mass when a differential scanning calorimetry (JIS K 7121) was performed.

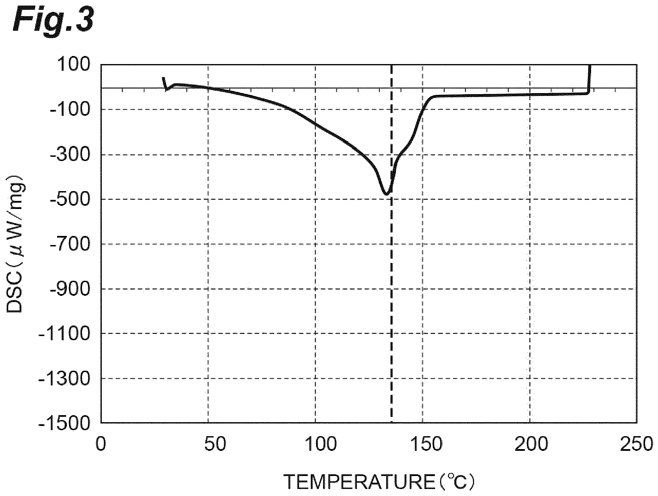

Fig. 3 is a diagram showing a total melting heat amount of the propylene/ethylene random copolymer (E) and a result in which a melting heat amount is divided at 135°C.

### (Comparative example 3)

A film of comparative example 3 was manufactured in the same manner as in example 1 except that an elastomer resin as below was used instead of the propylene/ethylene random copolymer (B), and a mixing ratio of the propylene homopolymer (A) and the elastomer resin was changed as shown in Table 2.

### (Elastomer resin)

An elastomer resin which is an olefin-based elastomer obtained by using butene-1 as a comonomer with ethylene as a main monomer using a metallocene catalyst, and has a melt flow rate (MFR: ISO 1133) (temperature 190°C, load 2.16 kg) of 3.6 g/10 min.

### (Comparative example 4)

A film of comparative example 4 having a thickness of 60 µm formed of only a material of the inner layer was manufactured using a resin mixture in which 83% by mass of the propylene/ethylene block copolymer (C) and 17% by mass of the ethylene/propylene copolymer elastomer (D) were mixed in a pellet state.

### (Example 10)

A film of example 10 was manufactured in the same manner as in example 1 except that a propylene/ethylene block copolymer (C") as below was used instead of the propylene/ethylene block copolymer (C).

### (Propylene/ethylene block copolymer (C"))

A propylene/ethylene block copolymer having a melt flow rate (MFR: ISO 1133) (temperature 230°C, load 2.16 kg) of 2.5 g/10 min, containing 81.0% by mass of the propylene polymer and 19.0% by mass of the ethylene-propylene copolymer, and in which an ethylene content contained in the ethylene-propylene copolymer is 36.7% by mass, and the ratio Mw (EPR)/Mw (PP) of the weight-average molecular weight Mw (EPR) of an ethylene-propylene copolymer to the weight-average molecular weight Mw (PP) of a propylene polymer is 1.65.

### (Example 11)

A film of example 11 was manufactured in the same manner as in example 2 except that the propylene/ethylene block copolymer (C") was used instead of the propylene/ethylene block copolymer (C).

### (Example 12)

A film of example 12 was manufactured in the same manner as in example 3 except that the propylene/ethylene block copolymer (C") was used instead of the propylene/ethylene block copolymer (C).

### <Various evaluations>

Evaluations as below were performed for the films of the examples. The results are shown in Tables 1 and 2.

### [Measurement method of thickness of dispersing element]

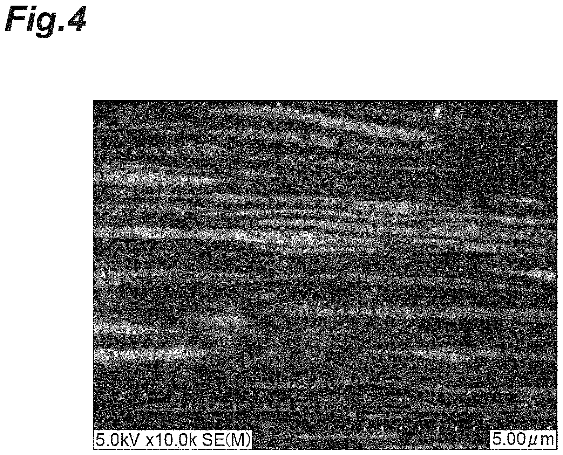

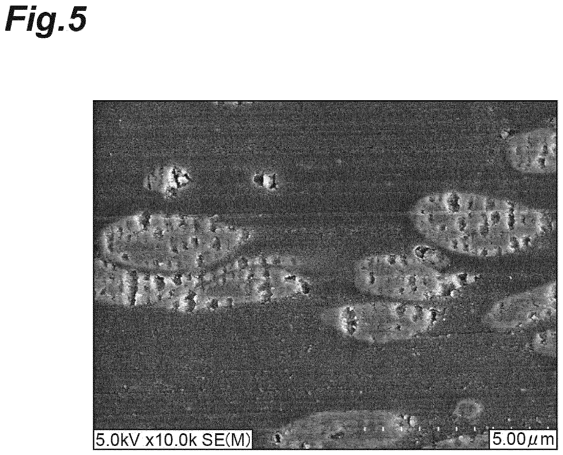

After the multilayer film obtained in each example was hardened with a photocurable resin, a cross section thereof was cut out with an ultramicrotome manufactured by Leica, and the ethylene-propylene copolymer component was dyed with ruthenium tetroxide. Then, the cross section of the film was observed at a magnification of 10,000 times using a scanning electron microscope (model number S-4800) manufactured by Hitachi High-Technologies Corporation, and a thickness of the ethylene-propylene copolymer component as a dispersing element was measured. The measurement was performed in a flow direction (MD) at the time of the film manufacture. Fig. 4 is a cross-sectional image of the inner layer in example 1. Fig. 5 is a cross-sectional image of the inner layer in example 10.

### [Measurement of internal haze]

Only the resin used for the inner layer was formed into a film shape having a thickness of 60 µm using an extruder under a condition of 250°C. After this film was cut into 70 mm×70 mm and silicone oil was applied to the light receiving areas of both surfaces of the film, the silicone oil was smoothed to a uniform thickness with a smooth film, and internal haze was measured in accordance with JIS K 7136 using a haze meter (model number HM-150) manufactured by Murakami Color Research Laboratory.

### [Measurement of surface roughness]

A surface roughness (surface roughness of the outer layer) of the film obtained in each example was measured. As a measuring device, a portable surface roughness measuring machine of a Surf Test manufactured by Mitutoyo Corporation was used. An arithmetic average roughness Ra (JIS B 0601-2001) was measured with a cutoff value λc set to 0.25.

### [Measurement of haze]

An evaluation was performed in accordance with the measurement method of haze described in JIS K7136 using a haze meter (model number HM-150) manufactured by Murakami Color Technology Research Laboratory.

### [Evaluation of heat sealing]

A biaxially stretched polyester film (PET) having a thickness of 12 µm, a biaxially stretched polyamide film (ONy) having a thickness of 15 µm, an AL foil having a thickness of 9 µm, and the film (polypropylene-based film) obtained in each example were laminated together by a normal dry lamination method using a urethane-based adhesive to form a laminate having the following structure.

### Laminate structure: PET/adhesive/ONy/adhesive/AL foil/adhesive/polypropylene-based film

The polypropylene-based films of the laminate were made to face each other and heat-sealed under conditions of a sealing pressure of 0.2 MPa, a sealing time of 1 second, a sealing width of 5 mm, and a sealing temperature of 200°C using a heat sealer manufactured by Tester Sangyo Co., Ltd. Thereafter, retort treatment was performed at 135°C for 40 minutes. The film on which the retort treatment was performed was cut into 15 mm width×80 mm, and T-shaped peeling was performed at a tensile speed of 300 mm/min to measure a heat seal strength using a tensile tester manufactured by Shimadzu Corporation.

### [Measurement of fusion strength]

The films obtained in each example were heat-sealed using a heat sealer manufactured by Tester Sangyo Co., Ltd. under conditions of a sealing pressure of 0.03 MPa, a sealing time of 30 seconds, a sealing width of 10 mm, and a sealing temperature of 135°C. Thereafter, the heat-sealed film was cut into 15 mm width×80 mm, and T-shaped peeling was performed at a tensile speed of 300 mm/min to measure a fusion strength of the heat seal portion using a tensile tester manufactured by Shimadzu Corporation.

**[Table 1]**

| | | | Example 1 | Example 2 | Example 3 | Example 4 | Example 5 | Example 6 | Example 7 | Example 8 | Example 9 |
|---|---|---|---|---|---|---|---|---|---|---|---|
| Thickness | Total | (µm) | 60.0 | 60.0 | 60.0 | 60.0 | 60.0 | 60.0 | 60.0 | 60.0 | 60.0 |
| | First and second outer layers | (µm) | 10.0 | 10.0 | 10.0 | 8.5 | 10.0 | 10.0 | 10.0 | 10.0 | 10.0 |
| | Inner layer | (µm) | 40.0 | 40.0 | 40.0 | 43.0 | 40.0 | 40.0 | 40.0 | 40.0 | 40.0 |
| Outer layer composition | Resin (A) | (% by mass) | 70.0 | 50.0 | 30.0 | 50.0 | 50.0 | 50.0 | 50.0 | 50.0 | 50.0 |
| | Resin(B) | (% by mass) | 30.0 | 50.0 | 70.0 | 50.0 | 50.0 | 50.0 | 50.0 | 50.0 | 50.0 |
| | Resin(E) | (%by mass) | - | - | - | - | - | - | - | - | - |
| | Elastomer resin | (% by mass) | - | - | - | - | - | - | - | - | - |
| Inner layer composition | Resin(C) | (% by mass) | 83.0 | 83.0 | 83.0 | 83.0 | 66.8 | 55.0 | - | - | - |
| | Resin(C') | (% by mass) | - | - | - | - | - | - | 79.7 | 73.4 | 66.8 |
| | Resin(C") | (%by mass) | - | - | - | - | - | - | - | - | - |
| | Resin(D) | (% by mass) | 17.0 | 17.0 | 17.0 | 17.0 | 33.2 | 45.0 | 20.3 | 26.6 | 33.2 |
| Thickness of dispersing element | | (µm) | 0.8 | 0.8 | 0.8 | 0.8 | 0.8 | 0.8 | 0.7 | 0.7 | 0.7 |
| Internal haze | | (%) | 3.9 | 3,9 | 3.9 | 3.9 | 3.9 | 3.9 | 4.5 | 4.5 | 4.5 |
| Surface roughness | | (nm) | 0.11 | 0,09 | 0.12 | 0.14 | 0.08 | 0.07 | 0.09 | 0.08 | 0.09 |
| Haze | | (%) | 9.0 | 9.4 | 10.2 | 9.0 | 10.2 | 10.5 | 10.7 | 10.1 | 8.7 |
| Heat seal strength | | (N/15mm) | 47.8 | 50.6 | 52.5 | 48.5 | 45.1 | 32.0 | 45.1 | 45.1 | 45.1 |
| Fusion strength | | (N/15mm) | 0.6 | 0.7 | 1.4 | 0.4 | 0.7 | 0.5 | 0.7 | 0.7 | 0.7 |

**[Table 2]**

| | | | Comparative example 1 | Comparative example 2 | Comparative example 3 | Comparative example 4 | Example 10 | Example 11 | Example 12 |
|---|---|---|---|---|---|---|---|---|---|
| Thickness | Total | (µm) | 60.0 | 60.0 | 60.0 | 60.0 | 60.0 | 60.0 | 60.0 |
| | First and second outer layers | (µm) | 10.0 | 10.0 | 10.0 | - | 10.0 | 10.0 | 10.0 |
| | Inner layer | (µm) | 40.0 | 40.0 | 40.0 | - | 40.0 | 40.0 | 40.0 |
| Outer layer composition | Resin (A) | (%by mass) | - | 80.0 | 80.0 | - | 70.0 | 50.0 | 30.0 |
| | Resin (B) | (%by mass) | 100.0 | - | - | - | 30.0 | 50.0 | 70.0 |
| | Resin (E) | (%by mass) | - | 20.0 | - | - | - | - | - |
| | Elastomer resin | (%by mass) | - | - | 20.0 | - | - | - | - |
| Inner layer composition | Resin (C) | (%by mass) | 83.0 | 83.0 | 83.0 | 83.0 | - | - | - |
| | Resin (C') | (%by mass) | - | - | - | - | - | - | - |
| | Resin (C") | (%by mass) | - | - | - | - | 83.0 | 83.0 | 83.0 |
| | Resin (D) | (%by mass) | 17.0 | 17.0 | 17.0 | 17.0 | 17.0 | 17.0 | 17.0 |
| Thickness of dispersing element | | (µm) | 0.8 | 0.8 | 0.8 | 0.8 | 1.8 | 1.8 | 1.8 |
| Internal haze | | (%) | 3.9 | 3.9 | 3.9 | 3.9 | 17.1 | 17.1 | 17.1 |
| Surface roughness | | (µm) | 0.15 | 0.08 | 0.19 | 0.21 | 0.21 | 0.21 | 0.21 |
| Haze | | (%) | 11.8 | 6.0 | 18.8 | 38.5 | 15.8 | 16.8 | 16.8 |
| Heat seal strength | | (N/15mm) | 53.6 | 64.5 | 20.3 | 43.3 | 43.3 | 43.3 | 43.3 |
| Fusion strength | | (N/15mm) | 13.0 | 3.3 | 5.7 | 0.6 | 0.6 | 0.6 | 0.6 |

The polypropylene-based multilayer film of the present invention achieves both heat resistance and transparency at a high level and can be suitably used as a sealant film for retort packaging.

### Reference Signs List

10 Polypropylene-based multilayer film
1a First outer layer
1b Second outer layer
2 Inner layer

## Claims

1. A multilayer film comprising:
a first outer layer containing 70 to 30% by mass of a propylene homopolymer (A) and 30 to 70% by mass of a propylene/ethylene random copolymer (B) having an ethylene content of 5% by mass or less;
an inner layer containing a propylene/ethylene block copolymer (C) and an ethylene/propylene copolymer elastomer (D); and
a second outer layer containing 70 to 30% by mass of the propylene homopolymer (A) and 30 to 70% by mass of the propylene/ethylene random copolymer (B) having an ethylene content of 5% by mass or less, in that order.

2. The multilayer film according to claim 1, wherein a ratio Mw (EPR)/Mw (PP) of a weight-average molecular weight Mw (EPR) (MW measured according to the method defined in the description) of an ethylene-propylene copolymer to a weight-average molecular weight Mw (PP) of a propylene polymer in the propylene/ethylene block copolymer (C) is 1.5 or less.

3. The multilayer film according to claim 1 or 2, wherein the inner layer contains 90 to 50% by mass of the propylene/ethylene block copolymer (C) and 10 to 50% by mass of the ethylene/propylene copolymer elastomer (D).

4. The multilayer film according to any one of claims 1 to 3, wherein a total thickness of the first outer layer and the second outer layer is 16 to 42% based on a thickness of the multilayer film.

5. The multilayer film according to any one of claims 1 to 4, wherein a thickness of the inner layer is 20 µm or more.

6. The multilayer film according to claim 2, wherein a thickness in a lamination direction of the ethylene-propylene copolymer present in the inner layer as a dispersing element is 1.5 µm or less.

7. A packaging material comprising the multilayer film according to any one of claims 1 to 6, and a base material.

8. A package made from a packaging material according to claim 7.

## Patentansprüche

1. Mehrschichtfolie, umfassend:
eine erste äußere Schicht, die 70 bis 30 Masse-% eines Propylenhomopolymers (A) und 30 bis 70 Masse-% eines statistischen Propylen/Ethylen-Copolymers (B) mit einem Ethylengehalt von 5 Masse-% oder weniger enthält;
eine innere Schicht, die ein Propylen/Ethylen-Blockcopolymer (C) und ein Ethylen/Propylen-Copolymer-Elastomer (D) enthält; und
eine zweite äußere Schicht, die 70 bis 30 Masse-% des Propylenhomopolymers (A) und 30 bis 70 Masse-% des statistischen Propylen/Ethylen-Copolymers (B) mit einem Ethylengehalt von 5 Masse-% oder weniger enthält, in dieser Reihenfolge.

2. Mehrschichtfolie nach Anspruch 1, wobei das Verhältnis Mw (EPR)/Mw (PP) des gewichtsmittleren Molekulargewichts Mw (EPR) (Mw gemessen nach dem in der Beschreibung definierten Verfahren) eines Ethylen-Propylen-Copolymers zu dem gewichtsmittleren Molekulargewicht Mw (PP) eines Propylenpolymers in dem Propylen-Ethylen-Blockcopolymer (C) 1,5 oder weniger ist.

3. Mehrschichtfolie nach Anspruch 1 oder 2, wobei die innere Schicht 90 bis 50 Masse-% des Propylen/Ethylen-Blockcopolymers (C) und 10 bis 50 Masse-% des Ethylen/Propylen-Copolymer-Elastomers (D) enthält.

4. Mehrschichtfolie nach einem der Ansprüche 1 bis 3, wobei die Gesamtdicke der ersten Außenschicht und der zweiten Außenschicht 16 bis 42%, bezogen auf die Dicke der Mehrschichtfolie, ist.

5. Mehrschichtfolie nach einem der Ansprüche 1 bis 4, wobei die Dicke der inneren Schicht 20 µm oder mehr ist.

6. Mehrschichtfolie nach Anspruch 2, wobei die Dicke des Ethylen-Propylen-Copolymers, das in der inneren Schicht als dispergierendes Element vorliegt, in Laminierungsrichtung 1,5 µm oder weniger ist.

7. Verpackungsmaterial, umfassend die Mehrschichtfolie nach einem der Ansprüche 1 bis 6 und ein Basismaterial.

8. Verpackung, hergestellt aus einem Verpackungsmaterial nach Anspruch 7.

## Revendications

1. Film multicouche comprenant :
une première couche extérieure contenant de 70 à 30 % en masse d'un homopolymère de propylène (A) et de 30 à 70 % en masse d'un copolymère aléatoire propylène/éthylène (B) ayant une teneur en éthylène de 5 % en masse ou moins ;
une couche intérieure contenant un copolymère à blocs propylène/éthylène (C) et un élastomère copolymère éthylène/propylène (D) ; et
une deuxième couche extérieure contenant de 70 à 30 % en masse de l'homopolymère de propylène (A) et de 30 à 70 % en masse du copolymère aléatoire propylène/éthylène (B) ayant une teneur en éthylène de 5 % en masse ou moins, dans cet ordre.

2. Film multicouche selon la revendication 1, dans lequel un rapport Mw (EPR)/Mw (PP) d'une masse moléculaire moyenne en poids Mw (EPR) (MW mesurée selon le procédé défini dans la description) d'un copolymère éthylène-propylène à une masse moléculaire moyenne en poids Mw (PP) d'un polymère de propylène dans le copolymère à blocs propylène/éthylène (C) est de 1,5 ou moins.

3. Film multicouche selon la revendication 1 ou 2, dans lequel la couche intérieure contient 90 à 50 % en masse du copolymère à blocs propylène/éthylène (C) et 10 à 50 % en masse de l'élastomère copolymère éthylène/propylène (D).

4. Film multicouche selon l'une des revendications 1 à 3, dans lequel une épaisseur totale de la première couche extérieure et de la deuxième couche extérieure est de 16 à 42 % par rapport à une épaisseur du film multicouche.

5. Film multicouche selon l'une des revendications 1 à 4, dans lequel une épaisseur de la couche intérieure est de 20 µm ou plus.

6. Film multicouche selon la revendication 2, dans lequel une épaisseur dans une direction de stratification du copolymère éthylène-propylène présent dans la couche intérieure en tant qu'élément dispersant est de 1,5 µm ou moins.

7. Matériau d'emballage comprenant le film multicouche selon l'une des revendications 1 à 6, et un matériau de base.

8. Emballage fabriqué à partir d'un matériau d'emballage selon la revendication 7.
